# EUROPÄISCHE PATENTANMELDUNG

(11) **EP 1 681 191 A2**
(43) Veröffentlichungstag der Anmeldung: **19.07.2006**
(21) Anmeldenummer: 06000745.7
(22) Anmeldetag: 13.01.2006
(51) Int. Cl.: B60H 1/00, B60H 1/24

(54) **Belüftungsvorrichtung für Freizeitfahrzeuge**

(30) Priorität: 17.01.2005 DE 102005002199
(71) Anmelder: Truma Gerätetechnik GmbH & Co. KG, 85640 Putzbrunn (DE)
(72) Erfinder: Plank, Hans, 83125 Eggstätt (DE)
(74) Vertreter: Müller - Hoffmann & Partner

(57) **Zusammenfassung**

Eine Belüftungsvorrichtung für einen Raum (10) in einer mobilen Einrichtung, z. B. einem Freizeitfahrzeug, weist eine in einem Klimatisierungsbetrieb betreibbare Kühlvorrichtung auf, mit der die Raumluft aus dem Raum (10) gekühlt werden kann. Die Kühlvorrichtung ist zwischen dem Klimatisierungsbetrieb und einem Belüftungsbetrieb umschaltbar, in welchem die Raumluft in die Kühlvorrichtung eingesaugt und aus der Kühlvorrichtung direkt in die Umgebung ausgeblasen wird. Dabei kühlt die Kühlvorrichtung die Raumluft nicht. Als Frischluft dienende Umgebungsluft strömt aus der Umgebung über Zwangsbelüftungsöffnungen (16) in den Raum (10) ein.

## Beschreibung

Die Erfindung betrifft gemäß dem Oberbegriff von Patentanspruch 1 eine Belüftungsvorrichtung für einen Raum in einer mobilen Einrichtung, z. B. einem Freizeitfahrzeug.

Eine derartige Belüftungsvorrichtung eignet sich dementsprechend insbesondere zum Belüften und Kühlen von Innenräumen von Reisemobilen oder Caravans, aber auch anderen mobilen Kleinräumen, wie z. B. Booten.

Bestandteil der Belüftungsvorrichtung ist eine Kühlvorrichtung, die in einem Klimatisierungsbetrieb betreibbar ist und zum Kühlen der Raumluft dient. Das der Luftkühlung zugrunde liegende Prinzip der Kälteerzeugung mittels eines Kühlkreislaufs ist seit langem bekannt.

Fig. 1 zeigt das Funktionsschema eines z. B. aus der DE 201 11 475 U1 bekannten Kühlkreislaufs bzw. Kälteprozesses, wie er bei zahlreichen Klimaanlagen Anwendung findet.

Ein Kompressor (Verdichter) 1 verdichtet ein gasförmiges Kältemittel und transportiert es über eine Kältemittelleitung 2 zu einem Verflüssiger (Kondensator) 3. Der als Wärmetauscher dienende Verflüssiger 3 wird durch Umgebungsluft gekühlt, die mittels eines Verflüssiger-Gebläses 4 über einen Umgebungslufteinlass 5 angesaugt und über einen Umgebungsluftauslass 6 ausgeblasen wird. Dadurch verflüssigt sich das zunächst gasförmige und unter einem hohen Druck stehende Kältemittel. Das flüssige und immer noch unter hohem Druck stehende Kältemittel wird über eine Kältemittelleitung 7 zu einer Expansionseinrichtung, z. B. einer Drossel 8, geführt, wo sich das Kältemittel entspannen kann.

Durch die Entspannung geht das Kältemittel in die gasförmige Phase über und entzieht dabei der Umgebung Wärme. Dieser Wärmeentzug wirkt über einen als Wärmetauscher dienenden Verdampfer 9 auf die Raumluft eines zu kühlenden Raums 10, welche mittels eines Verdampfer-Gebläses 11 durch einen Raumlufteinlass 12 angesaugt, durch den Verdampfer 9 geführt und über einen oder mehrere Raumluftauslässe 13 wieder zurück in den zu kühlenden Raum als Kaltluft geblasen wird. Die Raumluft kann dabei vor dem Verdampfer 9 durch ein Filter 14 gereinigt werden. Die Strömungswege der Umgebungsluft und der Raumluft sind als breite Pfeile dargestellt.

Durch die Aufnahme der Wärme der zu kühlenden Raumluft wird das gasförmige Kältemittel erwärmt und über eine Kältemittelleitung 15 zurück zum Kompressor 1 gefördert. Dort wird das jetzt wieder gasförmige Kältemittel erneut komprimiert und der Kühlkreislauf in der oben beschriebenen Weise fortgeführt.

Für die Belüftung von derartigen Räumen ist es insbesondere bei Wohnmobilen bekannt, Öffnungen zur Zwangsbelüftung vorzusehen, die nicht verschließbar sind. Auf diese Weise soll vermieden werden, dass der Raum hermetisch von der Umgebung abgeriegelt werden kann. Zur Erhöhung des Komforts ist es bei Freizeitmobilen weiterhin bekannt, Frischluft von außen in den Raum einzublasen, was jedoch ein zusätzliches Gebläse erfordert. Es sind auch Lösungen bekannt, bei denen Frischluft von außen durch das Gebläse eines Klimageräts in den Raum eingeblasen wird.

Der Erfindung liegt die Aufgabe zugrunde, eine Belüftungsvorrichtung anzugeben, durch die ein Raum mit möglichst geringem baulichen Aufwand in einer für den Nutzer angenehmen Weise belüftet werden kann.

Erfindungsgemäß wird die Aufgabe durch eine Belüftungsvorrichtung mit den Merkmalen von Patentanspruch 1 gelöst. Vorteilhafte Weiterentwicklungen der Erfindung sind in den abhängigen Ansprüchen definiert.

Eine erfindungsgemäße Belüftungsvorrichtung für einen Raum in einer mobilen Einrichtung weist eine Kühlvorrichtung auf, die in bekannter Weise in einem Klimatisierungsbetrieb betreibbar ist, in dem Raumluft aus dem Raum in die Kühlvorichtung eingesaugt, gekühlt und danach in den Raum zurück ausgeblasen wird. Weiterhin ist in bekannter Weise wenigstens eine das Innere des Raumes mit der Umgebung des Raumes verbindende Zwangsbelüftungsöffnung vorhanden. Erfindungsgemäß ist die Belüftungsvorrichtung dadurch gekennzeichnet, dass die Kühlvorrichtung zwischen dem Klimatisierungsbetrieb und einem Belüftungsbetrieb umschaltbar ist. In dem Belüftungsbetrieb wird die Raumluft in die Kühlvorrichtung eingesaugt und aus der Kühlvorrichtung direkt in die Umgebung ausgeblasen. Die Kühlvorrichtung kühlt dabei die Raumluft nicht. Als Frischluft dienende Umgebungsluft kann aus der Umgebung über die Zwangsbelüftungsöffnung direkt in den Raum nachströmen.

Im Belüftungsbetrieb wird somit die Kühlvorrichtung als Sauggebläse genutzt, welches Frischluft in Form von Umgebungsluft über die meist mehreren Zwangsbelüftungsöffnungen in den Raum und schließlich in die Kühlvorrichtung einsaugt und anschließend direkt in die Umgebung ausbläst. Die eigentliche Kühlvorrichtung ist dabei außer Betrieb, d. h., es findet keine Kühlung der Luft statt. Dies wäre auch nicht sinnvoll, da die Luft aus der Kühlvorrichtung nicht mehr in den Raum zurückgeführt wird.

Die Kühlvorrichtung bewirkt somit in dem Raum einen permanenten leichten Unterdruck, der zu einer Ausgleichs-Luftströmung aus der Umgebung über die Zwangsbelüftungsöffnungen führt. Auf diese Weise kann z. B. bei Betrieb in der Nacht eine natürliche Kühlung des Raumes herbeigeführt werden, ohne dass die Kühlvorrichtung im energieaufwändigen Klimatisierungsbetrieb eingesetzt werden muss. Oft reicht die kühle Nachtluft bereits aus, den Raum z. B. in einem Wohnmobil ausreichend zu kühlen.

Die Zwangsbelüftungsöffnungen sind auf Grund verschiedener Vorschriften und Normen ohnehin bei Wohnmobilen, Wohnwagen und anderen Freizeitfahrzeugen vorhanden. Sie sind dabei an Stellen platziert, bei denen üblicherweise ein geringer Schadstoffgehalt (keine Abgase) zu erwarten ist, z. B. in den Seitenwänden oder im Dach. Dementsprechend hat die eingesaugte Luft im Normalfall eine hohe Qualität.

Die Kühlvorrichtung ist vorteilhafterweise in bekannter Weise aufgebaut und weist einen im Klimatisierungsbetrieb betriebenen Kühlkreislauf auf. Bestandteil des Kühlkreislaufs ist ein Kompressor zum Verdichten eines Kältemittels, ein Verflüssiger mit einem zugeordneten Verflüssiger-Gebläse, eine Expansionseinrichtung zum Expandieren des Kältemittels und ein Verdampfer mit einem zugeordneten Verdampfer-Gebläse.

Im Klimatisierungsbetrieb zirkuliert das Kältemittel in bekannter Weise zwischen den Bauelementen. Das Verflüssiger-Gebläse dient dabei zum Zuführen von Umgebungsluft über einen Umgebungslufteinlass zu dem Verflüssiger und zum Abführen der Umgebungsluft von dem Verflüssiger über einen Umgebungsluftauslass. Auf diese Weise wird die Umgebungsluft zum Kühlen des Kältemittel genutzt und kann die im Kältemittel enthaltene, der Raumluft entzogene Wärme in die Umgebung abführen. Das Verdampfer-Gebläse dient wiederum zum Zuführen von Raumluft aus dem Raum über einen Raumlufteinlass zu dem Verdampfer und zum Abführen der Raumluft von dem Verdampfer sowie zum Blasen der Raumluft über einen Raumluftauslass zurück in den Raum. Dabei wird der Raumluft im Verdampfer Wärme entzogen.

Besonders vorteilhaft ist es, dass die Raumluft im Belüftungsbetrieb durch das Verflüssiger-Gebläse und/oder das Verdampfer-Gebläse über den Raumlufteinlass und/oder den Raumluftauslass in die Kühlvorrichtung eingesaugt wird. Hierbei liegt es im Belieben des Konstrukteurs, nur eines der beiden Gebläse oder auch beide Gebläse im Belüftungsbetrieb zu aktivieren. Besonders vorteilhaft wird es jedoch sein, dass lediglich das Verflüssiger-Gebläse betrieben wird, während das Verdampfer-Gebläse außer Funktion bleibt. Das Verflüssiger-Gebläse kann dann die Raumluft gleichermaßen über den Raumlufteinlass wie auch über den Raumluftauslass in die Kühlvorrichtung einsaugen. Dementsprechend ist in diesem Fall die Strömungsrichtung im Raumluftauslass umgekehrt.

Die Raumluft wird schließlich durch das aktive Gebläse über den dem Verflüssiger zugeordneten Umgebungsluftauslass in die Umgebung ausgeblasen, also nicht in den Raum zurückgeführt. Da eine Kühlung der Raumluft im Belüftungsbetrieb nicht zweckmäßig ist, sollten der Kompressor und die Expansionseinrichtung außer Funktion sein.

Besonders vorteilhaft ist es, dass eine Umschaltvorrichtung zum Umschalten zwischen dem Klimatisierungsbetrieb und dem Belüftungsbetrieb vorgesehen ist. Dabei kann im Belüftungsbetrieb durch die Umschaltvorrichtung der Umgebungslufteinlass verschlossen und eine Strömungsverbindung zwischen einer - bezogen auf die Luftströmungsrichtung im Klimatisierungsbetrieb - stromauf von dem Raumluftauslass angeordneten Verdampferkammer und einer Saugseite des Verflüssiger-Gebläses hergestellt sein. Auf diese Weise wird gewährleistet, dass das Verflüssiger-Gebläse ausschließlich Raumluft über den Raumlufteinlass und/oder den Raumlufteinlass einsaugt, nicht jedoch über den jetzt verschlossenen Umgebungslufteinlass. Dadurch kann die Wirkung des Verflüssiger-Gebläses effektiv zur Belüftung des Raumes genutzt werden.

Im Klimatisierungsbetrieb hingegen stellt die Umschaltvorrichtung sicher, dass der Umgebungslufteinlass geöffnet und die Strömungsverbindung zwischen der Verdampferkammer und der Saugseite des Verflüssiger-Gebläses unterbrochen ist.

Vorzugsweise weist die Umschaltvorrichtung eine Klappe auf, die z. B. an die Verdampferkammer angrenzt. Die Klappe kann jedoch auch an anderer Stelle zwischen dem Raumluftauslass und dem Verflüssiger-Gebläse angeordnet sein, sofern sie die nachfolgenden Funktionen erfüllt. Im Klimatisierungsbetrieb ist die Klappe in eine erste Stellung bewegbar, in der die Klappe die Strömungsverbindung zwischen der Verdampferkammer und der Saugseite des Verflüssiger-Gebläses unterbricht und den Umgebungslufteinlass freigibt. Im Belüftungsbetrieb ist die Klappe in eine zweite Stellung bewegbar, in der sie die Strömungsverbindung zwischen der Verdampferkammer und der Saugseite des Verflüssiger-Gebläses öffnet und den Umgebungslufteinlass verschließt. Die Klappe kann somit in einfacher Weise zwischen den zweiten Stellungen verschwenkt werden. Darüber hinaus kann es zweckmäßig sein, in der Umschaltvorrichtung auch eine elektrische bzw. elektronische Steuerung vorzusehen, um z. B. die Kälteerzeugung im Belüftungsbetrieb zu unterbinden oder um im Belüftungsbetrieb lediglich eines (z. B. das Verflüssiger-Gebläse) der beiden Gebläse zu betreiben. Weiterhin sollte es die Steuerung ermöglichen, das oder die Gebläse mit verschiedenen Leistungsstufen zu betreiben, um einen unterschiedlich starken Luftdurchsatz zu erreichen.

Bei einer einfachen Ausgestaltung kann die Klappe auch direkt mechanisch mit einem elektrischen Schalter gekoppelt sein, der die gewünschten Steuerungsmaßnahmen schaltet. Es ist darüber hinaus eine Leistungsstufe bzw. Gebläsedrehzahl wünschenswert, die nur einen sehr geringen Luftzug im Inneren des Raumes 10 bewirkt. Auf diese Weise kann eine zugfreie Permanentbelüftung erreicht werden, die nicht nur wenig Energie zum Betreiben des Gebläsemotors erfordert, sondern für die Insassen des Raumes kaum merkbar ist.

Durch die Erfindung ist es somit möglich, ohne großen baulichen Aufwand, insbesondere ohne zusätzliche Luftleitungen eine effektive, für den Nutzer angenehme Belüftung des Raumes zu ermöglichen und damit z. B. auch eine natürliche Kühlung oder Erwärmung des Raumes herbeizuführen.

Diese und weitere Vorteile und Merkmale der Erfindung werden nachfolgend unter Zuhilfe der begleitenden Figuren näher erläutert. Es zeigen:
- **Fig. 1**: ein Funktionsschema eines Kühlkreislaufs in einer bekannten Kühlvorrichtung;
- **Fig. 2**: in schematischer Darstellung eine erfindungsgemäße Belüftungsvorrichtung im Klimatisierungsbetrieb;
- **Fig. 3**: die Belüftungsvorrichtung von Fig. 2 im Belüftungsbetrieb.

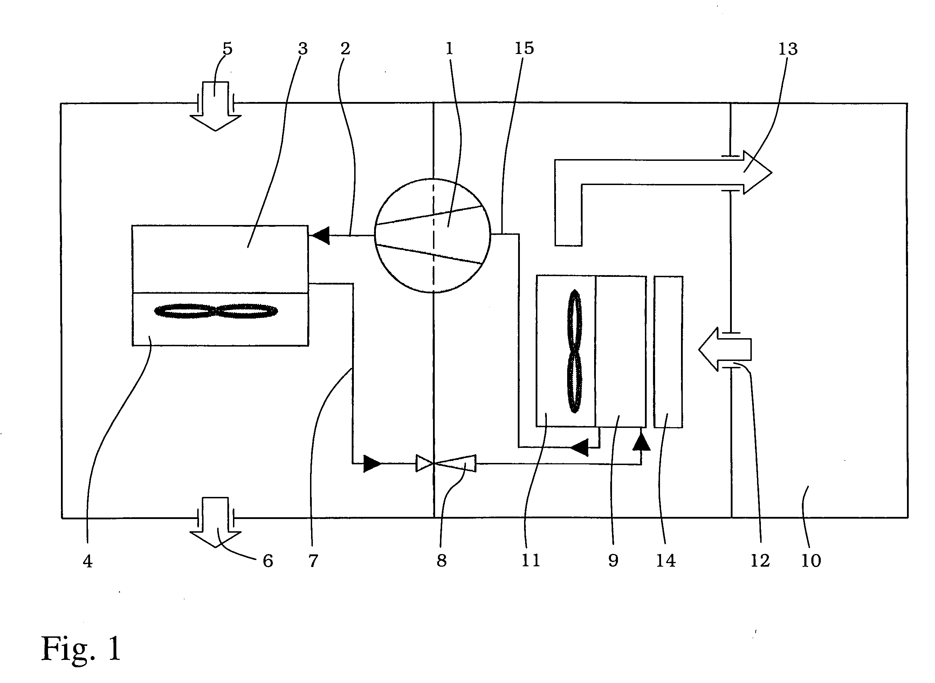

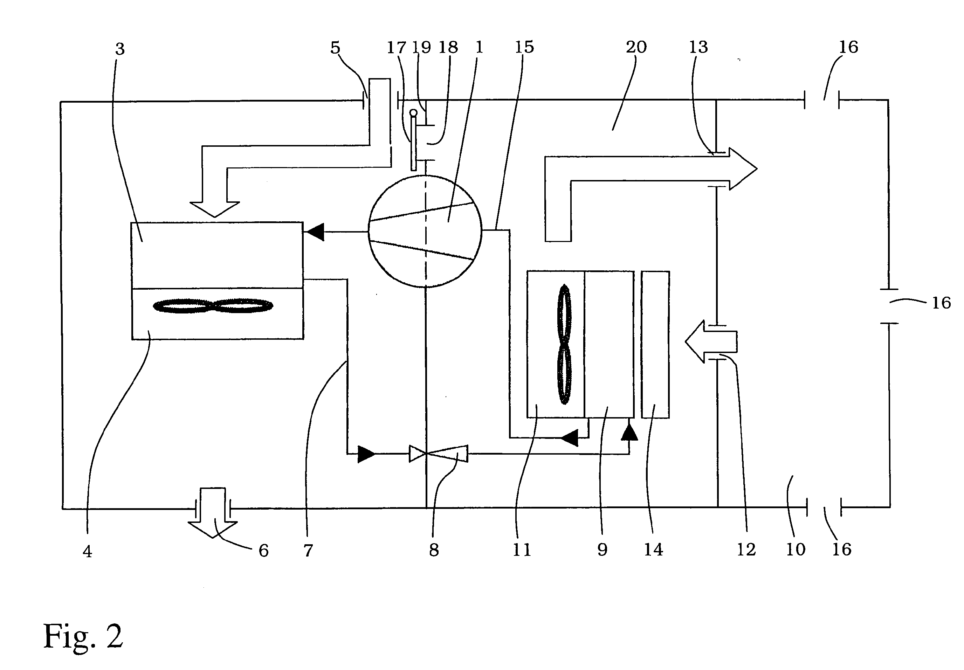

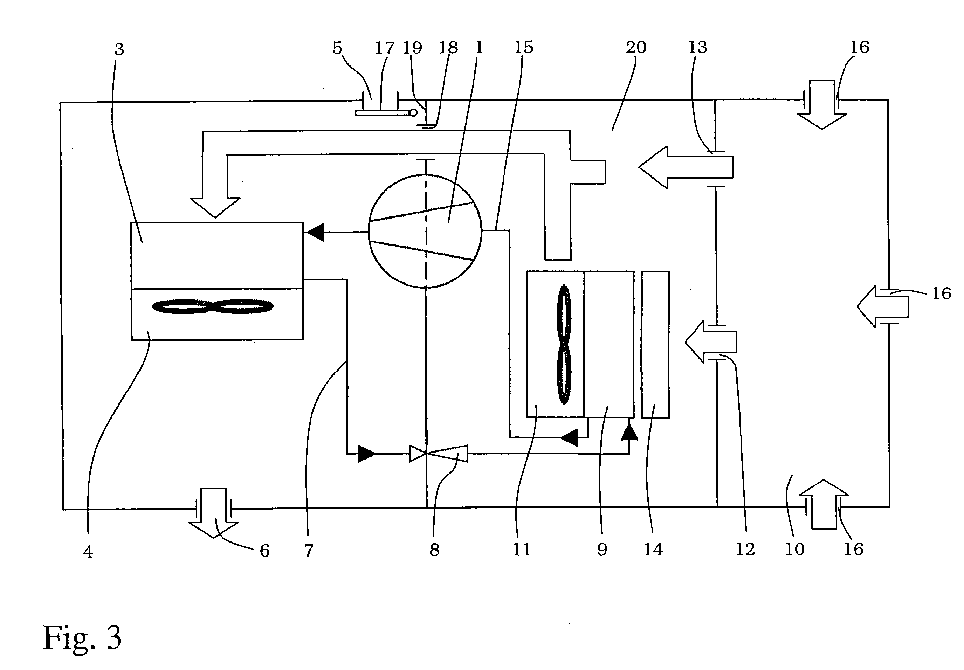

Die Fig. 2 und 3 zeigen in schematischer Darstellung die erfindungsgemäße Belüftungsvorrichtung in den beiden verschiedenen Betriebsarten. Wesentlicher Bestandteil der Belüftungsvorrichtung ist eine an sich bekannte Kühlvorrichtung, die bereits weiter oben unter Bezugnahme auf die Fig. 1 erläutert wurde. Zur Vermeidung von Wiederholungen wird daher auf die obige Beschreibung verwiesen. Außerdem werden in den Fig. 2 und 3 die gleichen Bezugszeichen wie in Fig. 1 verwendet, soweit es sich um identische oder weitgehend identische Bauelemente handelt.

In Abwandlung zu der Darstellung von Fig. 1 ist in den Fig. 2 und 3 dargestellt, dass der zu kühlende bzw. zu belüftende Raum 10 mehrere Zwangsbelüftungsöffnungen 16 aufweist, über die Frischluft aus der Umgebung (Umgebungsluft, Außenluft) in den Raum 10 einströmen kann. Derartige Zwangsbelüftungsöffnungen 16 sind an sich bekannt und teilweise in einschlägigen Normen vorgeschrieben, um eine hermetische Abriegelung des Raums 10 von der Umgebung zu vermeiden. Zum Beispiel kann es sich bei den Zwangsbelüftungsöffnungen 16 um verdeckte Luftschlitze handeln, die zum Schutz vor Regen- oder Spritzwasser durch eine Leiste geschützt und mit einem Fliegengitter versehen sind. Es handelt sich somit bei den Zwangsbelüftungslöffnungen 16 nicht um Frischluftöffnungen, die vom Nutzer bei Bedarf geöffnet oder geschlossen werden können. Vielmehr sind die Zwangsbelüftungsöffnungen 16 permanent offen. Häufig sind sie so gut versteckt, dass der Nutzer überhaupt keine Kenntnis von ihnen erhält.

Weiterhin ist eine als Teil einer Umschaltvorrichtung dienende Klappe 17 vorgesehen, die in dem in Fig. 2 gezeigten Klimatisierungsbetrieb eine Verbindungsöffnung 18 verschließt. Die Verbindungsöffnung 18 ist in einer Wand 19 vorgesehen, die eine aus dem Verflüssiger 3 und dem Verflüssiger-Gebläse 4 bestehende Hochdruckseite der Kühlvorrichtung von einer Niederdruckseite trennt, welche im Wesentlichen aus dem Verdampfer 9 und dem Verdampfer-Gebläse 11 besteht. Die Begriffe "Hochdruck" und "Niederdruck" sind aus der Klimatechnik bekannt und beziehen sich auf den Druckzustand des Kältemittels. Durch die Wand 19 ist sichergestellt, dass die Luftströme auf der Hochdruckseite sich nicht ungewollt mit den Luftströmen auf der Niederdruckseite vermischen können. Die Verbindungsöffnung 18 ermöglicht eine Strömungsverbindung zwischen der Niederdruckseite und der Hochdruckseite.

Die in Fig. 2 gezeigte Stellung der Klappe 17 wird als zum Klimatisierungsbetrieb zugehörige erste Stellung bezeichnet.

In Fig. 3 ist die Klappe 17 in einer dem Belüftungsbetrieb zugeordneten zweiten Stellung dargestellt, in der die Klappe 17 den Umgebungslufteinlass 5 verschließt und die Verbindungsöffnung 18 öffnet. Bei einem Vergleich der Fig. 2 und 3 ist erkennbar, dass die Klappe 17 zwischen der ersten und der zweiten Stellung verschwenkbar ist. Alternativ dazu kann die Klappe 17 auch als Dreh- oder Linearschieber ausgebildet sein, um die geforderte Funktionalität zu erreichen.

Die sich im Klimatisierungsbetrieb und im Belüftungsbetrieb ergebenden unterschiedlichen Luftströmungen sind durch breite Pfeile dargestellt.

Der in Fig. 2 gezeigte Klimatisierungsbetrieb entspricht im Prinzip der Darstellung von Fig. 1. Die Raumluft wird auf der Niederdruckseite aus dem Raum 10 über den Raumlufteinlass 12 durch das Verdampfer-Gebläse 11 angesaugt und danach über den Raumluftauslass 13 wieder in den Raum 10 eingeblasen. Die Zwangsbelüftungsöffnungen 16 erlauben zwar einen Luftaustausch mit der Umgebung. Auf Grund der Tatsache aber, dass über den Raumlufteinlass 12 und den Raumluftauslass 13 ein geschlossener Luftkreislauf gebildet wird, hat das Verdampfer-Gebläse 11 keine Auswirkung auf diesen Luftaustausch. Dementsprechend wird auch nur eine geringe Belüftung stattfinden.

Auf der Verflüssiger-Seite (Hochdruckseite) wird durch das Verflüssiger-Gebläse 4 Umgebungsluft über den Umgebungslufteinlass 5 eingesaugt, durch den Verflüssiger 3 geführt und am Umgebungsluftauslass 6 in die Umgebung ausgeblasen. Der Umgebungsluftauslass 6 kann in vorteilhafter Weise im Boden des Fahrzeugs angeordnet sein, so dass die Umgebungsluft (bzw. im Belüftungsbetrieb die Raumluft) nach unten abgeführt wird.

Da die Klappe 17 die Verbindungsöffnung 18 verschließt, wirkt die Wand 19 wie eine an sich bekannte und auch bei der Kühlvorrichtung von Fig. 1 verwendete Trennwand.

Zum Erreichen des Belüftungsbetriebs gemäß Fig. 3 wird die Klappe 17 in die zweite Stellung verschwenkt und verschließt so den Umgebungslufteinlass 5, während die Verbindungsöffnung 18 in der Trennwand 19 geöffnet wird. Der Kompressor 1 sowie die Drossel 8 sind jetzt funktionslos. Das Kältemittel zirkuliert nicht, so dass auch keine Kälteerzeugung stattfindet. Vielmehr wird lediglich das Verflüssiger-Gebläse 4 betrieben. Das Verdampfer-Gebläse 11 kann ebenfalls aktiviert sein, was jedoch im Regelfall nicht erforderlich sein wird.

Durch das Verflüssiger-Gebläse 4 wird eine Saugwirkung im Raum 10 erzeugt, so dass Luft aus der Umgebung über die Zwangsbelüftungsöffnungen 16 in den Raum 10 eindringt. Die Raumluft wird über den Raumlufteinlass 12 und den Raumluftauslass 13 aus dem Raum 10 gesaugt. Die über den Raumluftauslass 13 in umgekehrter Richtung strömende Luft gelangt in eine Verdampferkammer 20. Dort vermischt sie sich mit der über den Raumlufteinlass 12 angesaugten Luft, die jedoch vorher das Filter 14, den Verdampfer 9 und das Verdampfer-Gebläse 11 durchströmt hat. Je nach Ausgestaltung genügt es, dass die Luft lediglich über den Raumluftauslass 13 oder den Raumlufteinlass 12 angesaugt wird und nicht über beide gleichzeitig. Der Gesamtluftstrom durchtritt dann die Verbindungsöffnung 18 und gelangt über den - jetzt funktionslosen - Verflüssiger 3 zum Verflüssiger-Gebläse 4, von wo aus sie über den Umgebungsluft-Auslass 6 in die Umgebung ausgeblasen wird. Auf diese Weise wird eine wirksame Belüftung des Raumes 10 erreicht.

## Patentansprüche

1. Belüftungsvorrichtung für einen Raum in einer mobilen Einrichtung, mit
- einer Kühlvorrichtung, die in einem Klimatisierungsbetrieb betreibbar ist, in dem Raumluft aus dem Raum (10) in die Kühlvorrichtung eingesaugt, gekühlt und danach zurück in den Raum (10) ausgeblasen wird; und mit
- wenigstens einer das Innere des Raumes (10) mit der Umgebung des Raumes (10) verbindenden Zwangsbelüftungsöffnung (16);
**dadurch gekennzeichnet, dass** die Kühlvorrichtung zwischen dem Klimatisierungsbetrieb und einem Belüftungsbetrieb umschaltbar ist, in welchem
- die Raumluft in die Kühlvorrichtung eingesaugt und aus der Kühlvorrichtung in die Umgebung ausgeblasen wird,
- die Kühlvorrichtung die Raumluft nicht kühlt, und
- als Frischluft dienende Umgebungsluft aus der Umgebung über die Zwangsbelüftungsöffnung (16) in den Raum (10) nachströmt.

2. Belüftungsvorrichtung nach Anspruch 1, **dadurch gekennzeichnet, dass** die Kühlvorrichtung einen im Klimatisierungsbetrieb betriebenen Kühlkreislauf aufweist, der als Bauelemente wenigstens
- einen Kompressor (1) zum Verdichten eines Kältemittels,
- einen Verflüssiger (3) mit einem zugeordneten Verflüssiger-Gebläse (4),
- eine Expansionseinrichtung (8) zum Expandieren des Kältemittels, und
- einen Verdampfer (9) mit einem zugeordneten Verdampfer-Gebläse (11) aufweist.

3. Belüftungsvorrichtung nach Anspruch 2, **dadurch gekennzeichnet, dass** im Klimatisierungsbetrieb
- das Kältemittel zwischen den Bauelementen (1, 3, 8, 9) zirkuliert;
- das Verflüssiger-Gebläse (4) zum Zuführen von Umgebungsluft über einen Umgebungslufteinlass (5) zu dem Verflüssiger (3) und zum Abführen der Umgebungsluft von dem Verflüssiger (3) über einen Umgebungsluftauslass (6) dient; und dass
- das Verdampfer-Gebläse (11) zum Zuführen von Raumluft aus dem Raum (10) über einen Raumlufteinlass (12) zu dem Verdampfer (9) und zum Abführen der Raumluft von dem Verdampfer (9) über einen Raumluftauslass (13) zurück in den Raum (10) dient.

4. Belüftungsvorrichtung nach Anspruch 2 oder 3, **dadurch gekennzeichnet dass** im Belüftungsbetrieb
- die Raumluft durch das Verflüssiger-Gebläse (4) und/oder das Verdampfer-Gebläse (11) über den Raumlufteinlass (12) und/oder den Raumluftauslass (13) in die Kühlvorrichtung eingesaugt wird;
- die Raumluft über den dem Verflüssiger (3) zugeordneten Umgebungsluftauslass (6) ausgeblasen wird; und dass
- der Kompressor (1) und die Expansionseinrichtung (8) außer Funktion sind.

5. Belüftungsvorrichtung nach einem der Ansprüche 1 bis 4, **dadurch gekennzeichnet, dass** eine Umschaltvorrichtung (17) zum Umschalten zwischen dem Klimatisierungsbetrieb und dem Belüftungsbetrieb vorgesehen ist.

6. Belüftungsvorrichtung nach Anspruch 5, **dadurch gekennzeichnet, dass** im Belüftungsbetrieb durch die Umschaltvorrichtung (17) der Umgebungslufteinlass (5) verschlossen und eine Strömungsverbindung (18) zwischen einer - bezogen auf die Luftströmungsrichtung im Klimatisierungsbetrieb - stromauf von dem Raumluftauslass (13) angeordneten Verdampferkammer (20) und einer Saugseite des Verflüssiger-Gebläses (4) hergestellt wird.

7. Belüftungsvorrichtung nach Anspruch 6, **dadurch gekennzeichnet, dass** die Umschaltvorrichtung eine Klappe (17) aufweist, die
- im Klimatisierungsbetrieb in eine erste Stellung bewegbar ist, in der die Klappe (17) die Strömungsverbindung (18) zwischen der Verdampferkammer (20) und der Saugseite des Verflüssiger-Gebläses (4) unterbricht und den Umgebungslufteinlass (5) freigibt, und die
- im Belüftungsbetrieb in eine zweite Stellung bewegbar ist, in der die Klappe (17) die Strömungsverbindung (18) zwischen der Verdampferkammer (20) und der Saugseite des Verflüssiger-Gebläses (4) öffnet und den Umgebungslufteinlass (5) verschließt.

8. Belüftungsvorrichtung nach einem der Ansprüche 2 bis 7, **dadurch gekennzeichnet, dass** im Belüftungsbetrieb lediglich das Verflüssiger-Gebläse (4) betrieben wird, während das Verdampfer-Gebläse (11) außer Funktion ist.
